# EUROPEAN PATENT SPECIFICATION

(11) **EP 3 396 230 B1**
(45) Date of publication and mention of the grant of the patent: **27.01.2021**
(21) Application number: 16879272.9
(22) Date of filing: 19.12.2016
(51) Int. Cl.: H05B 33/12, C09K 11/02, F21S 41/16, F21S 41/176

(54) **PHOSPHOR PLATE PACKAGE, LIGHT-EMITTING PACKAGE, AND VEHICLE HEAD LAMP COMPRISING SAME**
PHOSPHORPLATTENVERPACKUNG, LICHTEMITTIERENDE VERPACKUNG UND FAHRZEUGSCHEINWERFER DAMIT
BOÎTIER DE PLAQUE DE PHOSPHORE, BOÎTIER ÉLECTROLUMINESCENT ET PHARE DE VÉHICULE LE COMPRENANT

(30) Priority: 22.12.2015 KR 20150183684
(43) Date of publication of application: 31.10.2018
(73) Proprietor: LG Innotek Co., Ltd., 98 Huam-ro, Jung-gu Seoul 04637 (KR)
(72) Inventor: WON, Ju Yeon, Seoul 04637 (KR); KIM, Won Jin, Seoul 04637 (KR); SON, Mun Yeong, Seoul 04637 (KR)
(74) Representative: M. Zardi & Co S.A.
(86) International application number: PCT/KR2016/014853
(87) International publication number: WO 2017/111405

(56) References cited:
- WO-A1-2012/058040
- JP-A- 2013 219 123
- KR-A- 20150 090 458
- KR-A- 20150 090 458
- KR-A- 20150 091 614
- KR-B1- 101 559 279
- US-A1- 2013 228 800
- US-A1- 2013 335 989
- US-A1- 2014 168 942
- US-A1- 2014 191 223

## Description

### [Technical Field]

The present invention relates to a phosphor plate package having a wide light distribution, a light-emitting package, and a vehicle headlamp including the same.

### [Background Art]

Laser diodes (LDs) have an advantage of high linearity of light, but have a disadvantage in that the LDs are difficult to be applied to vehicle headlamps which require a wide light distribution because the spreadability of light thereof is weak.

In order to increase the spreadability of light of an LD, a technique of increasing the diffusibility of light by adding inorganic particles or the like to an adhesion layer interposed between a phosphor plate and a substrate has become common. However, there are problems in that transmittance is lowered due to the addition of the inorganic particles or the like and luminance is reduced due to backscattering.

Further, since a polymer resin should be used as the adhesion layer, a carbonization phenomenon occurs in the adhesion layer due to heat generated by a manufacturing process or use thereof, which causes a decrease in transmittance and luminance.

Examples of phosphor plate packages according to the prior art are known from US 2013/335989 and US 2014/191223.

### [Disclosure]

### [Technical Problem]

The present invention is directed to providing a phosphor plate package having a improved transmittance and a wide light distribution, a light-emitting package, and a vehicle headlamp including the same.

### [Technical Solution]

According to the present invention there are provided a phosphor plate package according to claim 1 and a light-emitting package according to claim 10. Further embodiments of the phosphor plate package and light-emitting package according to the present invention are defined by the dependent claims

One aspect of as disclosed provides a phosphor plate package including a substrate, a phosphor plate disposed on one surface of the substrate, and a glass paste layer interposed between the substrate and the phosphor plate.

### [Advantageous Effects]

According to an embodiment of the present invention, a phosphor plate package having improved transmittance and wide light distribution can be provided.

Further, a carbonization phenomenon found in a conventional phosphor plate package does not occur in the phosphor plate package, and the phosphor plate package can be manufactured by a simple manufacturing process without using expensive inorganic particles, thereby improving the productivity thereof.

### [Description of Drawings]

FIG. 1 is a cross-sectional view of a phosphor plate package according to an embodiment of the present invention.
FIG. 2 is an X-ray diffraction (XRD) graph showing the presence of an amorphous glass crystalline structure inside a phosphor plate package according to an embodiment of the present invention.
FIG. 3 is a set of graphs showing a light distribution (a) of a conventional phosphor plate package and a light distribution (b) of a phosphor plate package according to an embodiment of the present invention.
FIG. 4 is a set of photographs showing test results of carbonization phenomena of a conventional phosphor plate package (a) and a phosphor plate package (b) according to an embodiment of the present invention.
FIG. 5 is a cross-sectional view of a light-emitting package according to an embodiment of the present invention.
FIG. 6 is a cross-sectional view of a vehicle headlamp according to an embodiment of the present invention.

### [Modes of the Invention]

Hereinafter, exemplary embodiments of the present invention that are easily performed by those skilled in the art will be described in detail with reference to the accompanying drawings. However, embodiments described in this specification and configurations shown in the drawings are only exemplary examples of the present invention. It should be understood that the present invention covers various equivalents and modifications that can substitute for the embodiments herein and drawings at the time of filing of this application. In addition, in detailed descriptions of operation principles of the exemplary embodiments of the present invention, when it is determined that detailed descriptions of related well-known functions and configurations unnecessarily obscure the gist of the invention, the detailed descriptions thereof will be omitted. Some terms described below are defined in consideration of functions in the present invention. Therefore, the meanings of terms should be interpreted based on the content throughout this specification.

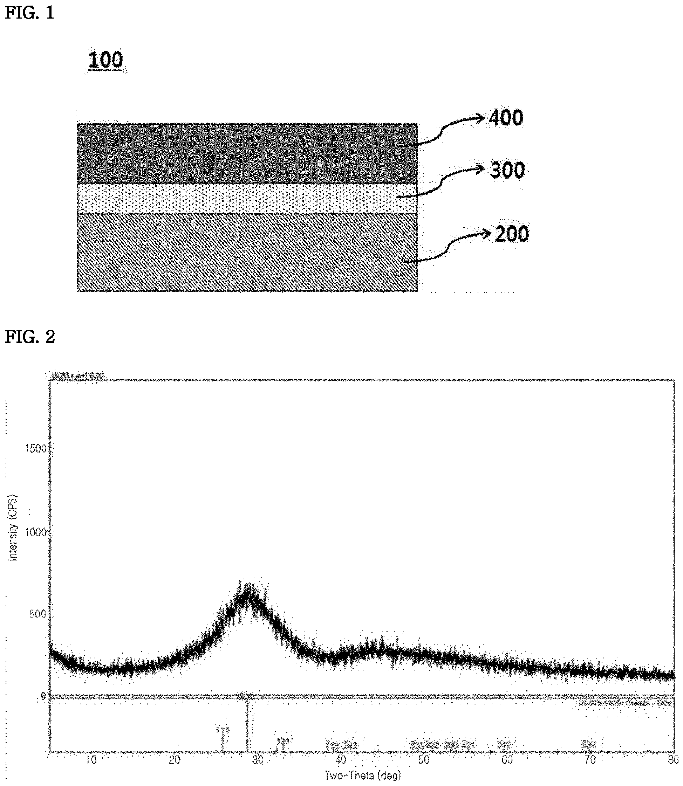

As shown in FIG. 1, a phosphor plate package 100 according to an embodiment of the present invention may have a structure in which a substrate 200, a glass paste layer 300, and a phosphor plate 400 are sequentially stacked.

The substrate 200 according to the embodiment of the present invention may be a glass substrate or a plastic substrate.

The glass paste layer 300 according to the embodiment of the present invention may include a binder resin and a glass frit. In addition, the glass paste layer 300 may further include a dispersant, an additive, or the like. A thickness of the glass paste layer 300 is from 5 to 10 mm. When the thickness of the glass paste layer 300 is less than 5 mm, an effect of improving a light distribution may be insufficient, and when the thickness of the glass paste layer 300 is more than 10 mm, transmittance may be lowered.

The binder resin may be an ethyl-based polymer resin, a butyl-based polymer resin, or a methyl-based polymer resin. The binder resin is preferably a methyl silicone resin in terms of dispersibility of an inorganic phosphor and heat resistance.

The glass frit according to the embodiment of the present invention may be a B₂O₃-SiO₂-based glass frit, a BaO-B₂O₃-SiO₂-based glass frit, or a ZnO-B₂O₃-SiO₂-based glass frit, which has low reactivity with an inorganic phosphor and mixes well with a binder. Preferably, the glass frit may be a ZnO-B₂O₃-SiO₂-based glass frit. The glass frit is preferably present in an amount of 0.5 to 2 parts by volume based on 100 parts by volume of a sintered layer.

The glass frit may be present in an amount of 30 to 70 wt% based on the total parts by weight of the glass paste layer 300.

The glass frit according to the embodiment of the present invention may have the same composition as that of a glass frit included in the phosphor plate 400. It is preferable that the glass frit according to the embodiment of the present invention and the glass frit included in the phosphor plate 400 have the same composition in terms of simplifying a manufacturing process.

The glass paste layer 300 according to the embodiment of the present invention may have an amorphous glass crystalline structure. FIG. 2 is a graph showing an analysis result of a phosphor plate package including a glass paste layer using X-ray diffraction (XRD) equipment. A peak which is shown in the graph of FIG. 2 indicates that an amorphous structure is included in the phosphor plate package 100. It can be seen that the amorphous structure is a structure of the glass frit included in the glass paste layer 300 and a beam angle of the phosphor plate package 100 is improved by the amorphous structure.

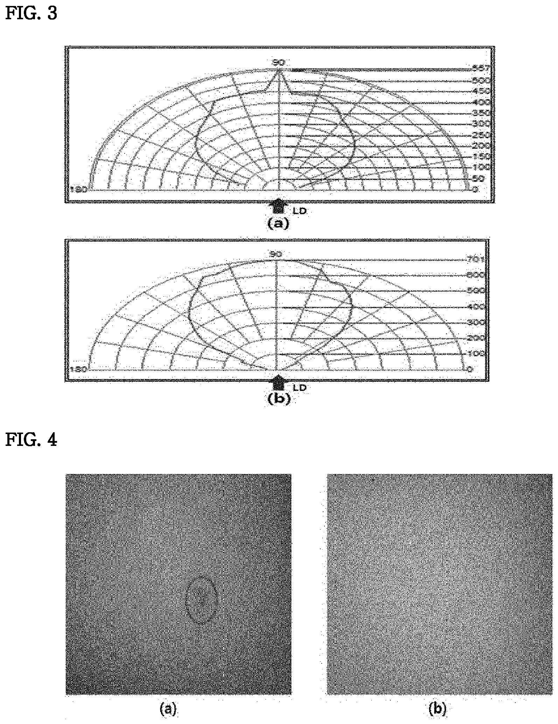

FIG. 3 is a set of graphs showing that a beam angle is improved, wherein (a) is a graph showing a beam angle of a conventional phosphor plate package having a structure of 'a substrate + a methyl silicon adhesive member containing zirconia + a phosphor plate' and (b) is a graph showing a beam angle of the phosphor plate package according to the embodiment of the present invention. As can be seen from the above graphs, the conventional phosphor plate package (a) may have a strong peak of light emitted from a laser diode (LD) at a front (90 degrees), whereas the phosphor plate package according to the embodiment of the present invention may have a wide light distribution.

Similar to FIG. 3, FIG. 4 is a set of scanning electron microscope (SEM) photographs showing a conventional phosphor plate package (a) having a structure of 'a substrate + a methyl silicon adhesive member containing zirconia + a phosphor plate' and the phosphor plate package (b) according to the embodiment of the present invention. It can be seen that the conventional phosphor plate is carbonized by heat when an LD is driven at 1A or higher. As described above, the carbonization phenomenon may be a factor that hinders the transmittance and scattering property of the phosphor plate package.

An inorganic phosphor included in the phosphor plate 400 according to the embodiment of the present invention may be one of yellow, green, and red phosphors according to an optical property and a color of lighting which are required in the phosphor plate 400, an application field thereof, or the like, or the inorganic phosphor may be two or more types of phosphors in which light having different wavelengths is excited as necessary.

A yttrium aluminum garnet (YAG)-based phosphor, a lutetium aluminum garnet (LuAG)-based phosphor, a nitride-based phosphor, a sulfide-based phosphor, or a silicate-based phosphor may be used as the inorganic phosphor, and preferably, a lutetium aluminum garnet (LuAG)-based phosphor or a nitride-based phosphor, which has low reactivity with the glass frit of the present invention and high stability at a high temperature, may be used as the inorganic phosphor.

The phosphor plate package according to the embodiment of the present invention may be applied to a light-emitting package including an LD light source, and the light-emitting package may be applied to a vehicle headlamp. As described above, the phosphor plate package according to the embodiment of the present invention may secure a wide light distribution and high transmittance when an LD light source having high linearity is applied to a vehicle headlamp.

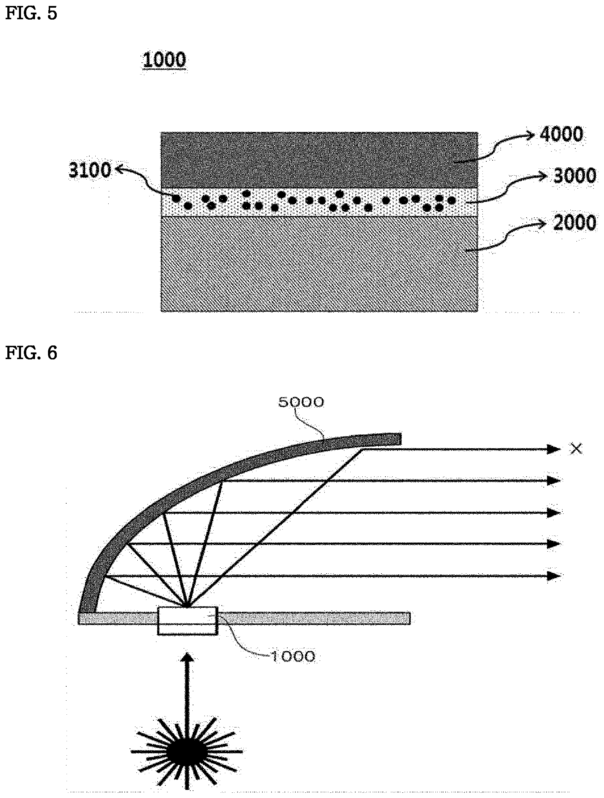

FIG. 5 is a cross-sectional view of a light-emitting package according to an embodiment of the present invention.

Referring to FIG. 5, a light-emitting package 1000 according to the embodiment of the present invention may include a light-emitting unit 2000, an adhesive member 3000, and a light conversion substrate 4000.

The light-emitting unit 2000 may be any one selected from a light-emitting diode (LED), an organic light-emitting diode (OLED), an LD, a laser, and a vertical-cavity surface-emitting laser (VCSEL).

The adhesive member may be interposed between the light-emitting unit 2000 and the light conversion substrate 4000. The adhesive member 3000 may include inorganic nanoparticles 3100 dispersed in a silicone resin. An ethyl-based silicone resin, a butyl-based silicone resin, a methyl-based silicone resin, or a phenyl-based silicone resin may be used as the silicone resin, and a methyl silicone resin may maintain thermal stability while maintaining a high refractive index.

As shown in FIG. 1, the light conversion substrate may have a structure in which a substrate 200, a glass paste layer 300, and a phosphor plate 400 are sequentially stacked.

The substrate 200 according to the embodiment of the present invention may be a glass substrate or a plastic substrate.

The glass paste layer 300 according to the embodiment of the present invention may include a binder resin and a glass frit. In addition, the glass paste layer 300 may further include a dispersant, an additive, or the like. A thickness of the glass paste layer 300 ranges from 5 to 10 mm. When the thickness of the glass paste layer 300 is less than 5 mm, an effect of improving a light distribution may be insufficient, and when the thickness of the glass paste layer 300 is more than 10 mm, transmittance may be lowered.

The binder resin included in the glass paste layer 300 may be an ethyl-based polymer resin, a butyl-based polymer resin, or a methyl-based polymer resin, and a methyl silicone resin having high dispersibility of an inorganic phosphor and heat resistance may be used as the binder resin.

The glass frit according to the embodiment of the present invention may be a B₂O₃-SiO₂-based glass frit, a BaO-B₂O₃-SiO₂-based glass frit, a ZnO-B₂O₃-SiO₂-based glass frit, or a ZnO-B₂O₃-SiO₂-based glass frit, which has low reactivity with an inorganic phosphor and mixes well with a binder.

The glass frit may be present in an amount of 30 to 70 wt% based on the total parts by weight of the glass paste layer.

The glass frit according to the embodiment of the present invention may have the same composition as that of a glass frit included in the phosphor plate 400. When the glass frit according to the embodiment of the present invention and the glass frit included in the phosphor plate 400 have the same composition, a manufacturing process may be facilitated.

The glass paste layer 300 according to the embodiment of the present invention may have an amorphous glass crystalline structure.

The phosphor plate 400 may include an inorganic phosphor. The inorganic phosphor may be one of yellow, green, and red phosphors according to an optical property and a color of lighting which are required in the phosphor plate 400, an application field thereof, or the like, or the inorganic phosphor may be two or more types of phosphors in which light having different wavelengths is excited as necessary.

A yttrium aluminum garnet (YAG)-based phosphor, a lutetium aluminum garnet (LuAG)-based phosphor, a nitride-based phosphor, a sulfide-based phosphor, or a silicate-based phosphor may be used as the inorganic phosphor, and preferably, a lutetium aluminum garnet (LuAG)-based phosphor or a nitride-based phosphor, which has low reactivity with the glass frit of the present invention and high stability at a high temperature, may be used as the inorganic phosphor.

FIG. 6 is a cross-sectional view of a vehicle headlamp according to an embodiment of the present invention.

Referring to FIG. 6, light, which is converted in a light conversion substrate of a light-emitting package 1000, is propagated to a reflector 5000 and is emitted in an X direction. A reflective member (not shown) may be disposed on a rear surface of the light-emitting package 1000, may reflect some converted light that has been converted and propagated toward the light-emitting package 1000 to return the light to the reflector 5000 and emit the light.

Further in the present invention, the light-emitting unit may be disposed on a printed circuit board. A light conversion substrate may be disposed on the light-emitting unit. An adhesive member may be interposed between the light-emitting unit and the light conversion substrate. Although not shown in the present invention, a transparent substrate may be interposed between the light-emitting unit and the adhesive member, and the light-emitting unit and the transparent substrate may be in contact with each other or may be spaced apart from each other. The transparent substrate may include a metal oxide, a sapphire, or a plastic. In the present invention, the light-emitting unit may be used in combination as a concept including a transparent substrate.

A plurality of light-emitting units may be provided. The light-emitting unit may include a light source mounted on a substrate, and a plurality of light sources may be provided. A plurality of light conversion substrates or a single light conversion substrate may be disposed on each of the plurality of light sources. Further, the adhesive member interposed between the light-emitting unit and the light conversion substrate may be interposed between the light conversion substrates.

The light conversion substrate may be in contact with the light-emitting unit or may be spaced apart from the light-emitting unit.

While the present invention has been described above with reference to the embodiments thereof as depicted in the drawings, the scope of the present invention is defined by the appended claims.

### [Reference Numerals]

100: PHOSPHOR PLATE PACKAGE
200: SUBSTRATE
300: GLASS PASTE LAYER
400: LIGHT CONVERSION SUBSTRATE

## Claims

1. A phosphor plate package (100) comprising:
a substrate (200);
a phosphor plate (400) disposed on one surface of the substrate (200); and
a glass paste layer (300) interposed between the substrate (200) and the phosphor plate (400),
**characterized in that** a thickness of the glass paste layer (300) ranges from 5 to 10 mm.

2. The phosphor plate package (100) of claim 1, wherein the glass paste layer (300) includes a binder resin and a glass frit.

3. The phosphor plate package (100) of claim 1, wherein the glass paste layer (300) includes an amorphous glass crystalline structure.

4. The phosphor plate package (100) of claim 2, wherein the binder resin includes one or more selected from the group consisting of an ethyl-based polymer resin, a butyl-based polymer resin, and a methyl-based polymer resin.

5. The phosphor plate package (100) of claim 2, wherein a content of the glass frit ranges from 30 to 70 wt% based on the total parts by weight of the glass paste layer (300).

6. The phosphor plate package (100) of claim 1, wherein the glass frit includes one or more materials selected from the group consisting of a B₂O₃-SiO₂-based material, a BaO-B₂O₃-SiO₂-based material, and a ZnO-B₂O₃-SiO₂-based material.

7. The phosphor plate package (100) of claim 1, wherein the glass paste layer (300) scatters light incident from the outside.

8. The phosphor plate package (100) of claim 7, wherein the glass paste layer (300) increases a light distribution area 15 degrees to 30 degrees on the basis of an incident angle of the light incident from the outside.

9. A light-emitting package (1000) comprising:
a light-emitting unit (2000); and
a light conversion substrate (4000) disposed on one surface of the light-emitting unit (2000),
wherein the light conversion substrate (4000) includes
a substrate (200),
a phosphor plate (400) disposed on one surface of a transparent member, and
a glass paste layer (300) interposed between the transparent member and the phosphor plate (400),
**characterized in that** a thickness of the glass paste layer (300) ranges from 5 to 10 mm.

10. The light-emitting package (1000) of claim 9, wherein the glass paste layer (300) includes a binder resin and a glass frit.

11. The light-emitting package (1000) of claim 9, wherein the glass paste layer (300) includes an amorphous glass crystalline structure.

12. The light-emitting package (1000) of claim 10, wherein the binder resin includes one or more selected from the group consisting of an ethyl-based polymer resin, a butyl-based polymer resin, and a methyl-based polymer resin.

13. The light-emitting package (1000) of claim 10, wherein a content of the glass frit ranges from 30 to 70 wt% based on the total parts by weight of the glass paste layer (300).

14. The light-emitting package of claim 10, wherein the glass paste layer (300) increases a light distribution area 15 degrees to 30 degrees on the basis of an incident angle of the light incident from the outside.

## Patentansprüche

1. Phosphorplattenbaugruppe (100) umfassend:
ein Substrat (200);
eine Phosphorplatte (400), die auf einer Oberfläche des Substrats (200) angeordnet ist; und
eine Glaspastenschicht (300), die zwischen dem Substrat (200) und der Phosphorplatte (400) positioniert ist,
**dadurch gekennzeichnet, dass** eine Dicke der Glaspastenschicht (300) von 5 bis 10 mm reicht.

2. Phosphorplattenbaugruppe (100) nach Anspruch 1, wobei die Glaspastenschicht (300) ein Bindemittelharz und eine Glasfritte umfasst.

3. Phosphorplattenbaugruppe (100) nach Anspruch 1, wobei die Glaspastenschicht (300) eine amorphe Glaskristallstruktur umfasst.

4. Phosphorplattenbaugruppe (100) nach Anspruch 2, wobei das Bindemittelharz eines oder mehrere umfasst, die aus der Gruppe ausgewählt sind, die aus einem Ethylbasieren Polymerharz, einem Butyl-basierten Polymerharz und einem Methylbasierten Polymerharz besteht.

5. Phosphorplattenbaugruppe (100) nach Anspruch 2, wobei ein Gehalt der Glasfritte von 30 bis 70 Gew.-% basierend auf den gesamten Gew.-Teilen der Glaspastenschicht (300) reicht.

6. Phosphorplattenbaugruppe (100) nach Anspruch 1, wobei die Glasfritte eines oder mehrere Materialien umfasst, die aus der Gruppe ausgewählt sind, die aus einem B₂O₃-SiO₂-basierten Material, einem BaO-B₂O₃-SiO₂-basierten Material und einem ZnO-B₂O₃-SiO₂-basierten Material besteht.

7. Phosphorplattenbaugruppe (100) nach Anspruch 1, wobei die Glaspastenschicht (300) von der Außenseite einfallendes Licht streut.

8. Phosphorplattenbaugruppe (100) nach Anspruch 7, wobei die Glaspastenschicht (300) einen Lichtverteilungsbereich um 15 Grad bis 30 Grad auf der Basis eines Einfallswinkels des von der Außenseite einfallenden Lichts vergrößert.

9. Lichtemittierungsbaugruppe (1000) umfassend:
eine Lichtemittierungseinheit (2000); und
ein Lichtumwandlungssubstrat (4000), das auf einer Oberfläche der Lichtemittierungseinheit (2000) angeordnet ist,
wobei das Lichtumwandlungssubstrat (4000)
ein Substrat (200),
eine Phosphorplatte (400), die auf einer Oberfläche eines transparenten Elements angeordnet ist, und
eine Glaspastenschicht (300) umfasst, die zwischen dem transparenten Element und der Phosphorplatte (400) positioniert ist,
**dadurch gekennzeichnet, dass** eine Dicke der Glaspastenschicht (300) von 5 bis 10 mm reicht.

10. Lichtemittierungsbaugruppe (1000) nach Anspruch 9, wobei die Glaspastenschicht (300) ein Bindemittelharz und eine Glasfritte umfasst.

11. Lichtemittierungsbaugruppe (1000) nach Anspruch 9, wobei die Glaspastenschicht (300) eine amorphe Glaskristallstruktur umfasst.

12. Lichtemittierungsbaugruppe (1000) nach Anspruch 10, wobei das Bindemittelharz eines oder mehrere umfasst, die aus der Gruppe ausgewählt sind, die aus einem Ethylbasieren Polymerharz, einem Butyl-basierten Polymerharz und einem Methylbasierten Polymerharz besteht.

13. Lichtemittierungsbaugruppe (1000) nach Anspruch 10, wobei ein Gehalt der Glasfritte von 30 bis 70 Gew.-% basierend auf den gesamten Gew.-Teilen der Glaspastenschicht (300) reicht.

14. Lichtemittierungsbaugruppe nach Anspruch 10, wobei die Glaspastenschicht (300) einen Lichtverteilungsbereich um 15 Grad bis 30 Grad auf der Basis eines Einfallswinkels des von der Außenseite einfallenden Lichts vergrößert.

## Revendications

1. Un boîtier (100) de plaque de phosphore comprenant :
un substrat (200) ;
une plaque de phosphore (400) disposée sur une surface du substrat (200) ; et
une couche de pâte de verre (300) interposée entre le substrat (200) et la plaque de phosphore (400),
**caractérisé en ce que** l'épaisseur de la couche de pâte de verre (300) est comprise entre 5 et 10 mm.

2. Le boîtier (100) de plaque de phosphore selon la revendication 1, dans lequel la couche de pâte de verre (300) comprend une résine liante et une fritte de verre.

3. Le boîtier (100) de plaque de phosphore selon la revendication 1, dans lequel la couche de pâte de verre (300) comprend une structure cristalline de verre amorphe.

4. Le boîtier (100) de plaque de phosphore selon la revendication 2, dans lequel la résine liante comprend une ou plusieurs résines sélectionnées dans le groupe constitué par une résine polymère à base d'éthyle, une résine polymère à base de butyle et une résine polymère à base de méthyle.

5. Le boîtier (100) de plaque de phosphore selon la revendication 2, dans lequel une teneur en fritte de verre est comprise entre 30 et 70% en poids des parties totales en poids de la couche de pâte de verre (300).

6. Le boîtier (100) de plaque de phosphore selon la revendication 1, dans lequel la fritte de verre comprend un ou plusieurs matériaux choisis dans le groupe consistant en un matériau à base de B₂O₃-SiO₂, un matériau à base de BaO-B₂O₃-SiO₂ et un matériau à base de ZnO-B₂O₃-SiO₂.

7. Le boîtier (100) de plaque de phosphore selon la revendication 1, dans lequel la couche de pâte de verre (300) diffuse la lumière incidente depuis l'extérieur.

8. Le boîtier (100) de plaque de phosphore selon la revendication 7, dans lequel la couche de pâte de verre (300) augmente une zone de distribution de la lumière de 15 degrés à 30 degrés sur la base d'un angle d'incidence de la lumière incidente provenant de l'extérieur.

9. Un boîtier électroluminescent (1000) comprenant :
une unité émettrice de lumière (2000) ; et
un substrat de conversion de lumière (4000) disposé sur une surface de l'unité émettrice de lumière (2000),
le substrat de conversion de lumière (4000) comprenant
un substrat (200),
une plaque de phosphore (400) disposée sur une surface d'un élément transparent, et
une couche de pâte de verre (300) interposée entre l'élément transparent et la plaque de phosphore (400),
**caractérisé en ce que** l'épaisseur de la couche de pâte de verre (300) est comprise entre 5 et 10 mm.

10. Le boîtier électroluminescent (1000) selon la revendication 9, dans lequel la couche de pâte de verre (300) comprend une résine liante et une fritte de verre.

11. Le boîtier électroluminescent (1000) selon la revendication 9, dans lequel la couche de pâte de verre (300) comprend une structure cristalline de verre amorphe.

12. Le boîtier électroluminescent (1000) selon la revendication 10, dans lequel la résine liante comprend une ou plusieurs résines sélectionnées dans le groupe constitué par une résine polymère à base d'éthyle, une résine polymère à base de butyle et une résine polymère à base de méthyle.

13. Le boîtier électroluminescent (1000) selon la revendication 10, dans lequel une teneur en fritte de verre est comprise entre 30 et 70% en poids des parties totales en poids de la couche de pâte de verre (300).

14. Le boîtier électroluminescent selon la revendication 10, dans lequel la couche de pâte de verre (300) augmente une zone de distribution de la lumière de 15 degrés à 30 degrés sur la base d'un angle d'incidence de la lumière incidente provenant de l'extérieur.
